# NEUE EUROPÄISCHE PATENTSCHRIFT

(11) **EP 2 580 171 B2**
(45) Veröffentlichungstag und Bekanntmachung des Hinweises auf die Entscheidung über den Einspruch: **19.09.2018**
(45) Hinweis auf die Patenterteilung: 26.11.2014
(21) Anmeldenummer: 12708273.3
(22) Anmeldetag: 23.02.2012
(51) Int. Cl.: C04B 28/06, C04B 35/628, C04B 20/10, C04B 111/28, C04B 35/66

(54) **FEUERFESTES REGENERATGRANULAT, VERFAHREN ZU SEINER HERSTELLUNG SOWIE DESSEN VERWENDUNG**
REFRACTORY REGENARATED GRANULATE, PROCESS OF MANUFACTURE AND USE THEREOF
GRANULÉ RÉFRACTAIRE RÉGÉNÉRÉ, SON PROCÉDÉ DE PRODUCTION ET SON UTILISATION

(30) Priorität: 27.05.2011 DE 102011102649
(43) Veröffentlichungstag der Anmeldung: 17.04.2013
(73) Patentinhaber: Refratechnik Holding GmbH, 85737 Ismaning (DE)
(72) Erfinder: KESSELHEIM, Bertram, 53557 Bad Hönningen (DE); STAHL, Sascha, 56170 Bendorf (DE)
(74) Vertreter: Patent- und Rechtsanwälte Dr. Solf & Zapf
(86) Internationale Anmeldenummer: PCT/EP2012/053093
(87) Internationale Veröffentlichungsnummer: WO 2012/163555

(56) Entgegenhaltungen:
- EP-A1- 2 060 640
- DE-A1- 4 427 406
- DE-A1- 4 427 602
- DE-A1- 4 434 939
- DE-U1-202009 009 417
- JP-A- 2004 155 611
- US-A1- 2007 112 092
- TIANS S ET AL: "Reuse and reproduction of used refractories", CHINA'S REFRACTORIES, EDITORIAL COMMITTEE OF CHINA'S REFRACTORIES, LUOYANG, CN, Bd. 15, Nr. 1, 1. Januar 2006 (2006-01-01) , Seiten 21-24, XP009158443, ISSN: 1004-4493
- OTHMAN A G M ET AL: "Recycling of spent magnesite and ZAS bricks for the production of new basic refractories", CERAMICS INTERNATIONAL, ELSEVIER, AMSTERDAM, NL, Bd. 31, Nr. 8, 1. Januar 2005 (2005-01-01) , Seiten 1053-1059, XP027796107, ISSN: 0272-8842 [gefunden am 2005-01-01]
- GRABNER B ET AL: "Einsatz von recycliertem Magnesia-Kohlenstoffmaterial in pech- und harzgebundenen STeinen", STAHL UND EISEN, VERLAG STAHLEISEN, DUSSELDORF, DE, Nr. Special, 1. Oktober 1994 (1994-10-01), Seiten 146-149, XP009158445, ISSN: 0340-4803
- English translation of D3 (including abstract obtained from esp@cenet).
- OSIPOV V.A. ET AL: 'Composition and fabrication of magnesia briquettes from refractory scrap for repairing the lining of oxygen converters' REFRACTORIES AND INDUSTRIAL CERAMICS Bd. 46, Nr. 2, 2005, Seiten 87 - 88
- JP 2005-5314193 A - Nippon Steel Corp.; 10-11-2005

## Beschreibung

Die Erfindung betrifft Granulate aus feuerfesten Regeneratwerkstoffen sowie ein Verfahren zu ihrer Herstellung aus Ausbruch- oder Verschleißmaterial feuerfester Zustellungen. Die Erfindung betrifft außerdem die Verwendung der Granulate.

Feuerfeste Werkstoffe sind im Taschenbuch "Feuerfeste Werkstoffe", Gerald Routschka, Hartmut Wuthnow, Vulkan-Verlag D-45128 Essen, 4. Aufl., S. 1, definiert. Demnach handelt es sich um auf feuerfesten Grundstoffen basierende Erzeugnisse, die grundsätzlich einen Kegelfallpunkt von ≥ 1500 °C haben. Eine Aufzählung von feuerfesten Grundstoffen findet sich im oben genannten Taschenbuch, S. 4 und 5. Weitergehende Informationen über feuerfeste Werkstoffe sind den S. 1 - 18 des Taschenbuchs zu entnehmen. Diese Kenntnisse des Fachmanns werden in der folgenden Beschreibung der Erfindung vorausgesetzt und berücksichtigt. Aus diesen feuerfesten Werkstoffen werden geformte oder ungeformte feuerfeste Erzeugnisse hergestellt.

Ausbruch- oder Verschleißmaterial feuerfester Zustellungen sind Materialien, die aus feuerfesten Auskleidungen, die z. B. erneuert oder ersetzt werden sollen, stammen.

Die vorliegende Erfindung hat zum Ziel, neue feuerfeste Werkstoffe für insbesondere ungeformte, insbesondere mit Wasser anzumachende, feuerfeste Erzeugnisse zu schaffen, die ein preiswerter Ersatz für die bekannten teuren feuerfesten Werkstoffe aus primären Rohstoffen sein können.
Ungeformte feuerfeste Erzeugnisse kennt der Fachmann. Sie werden z. B. im oben genannten Taschenbuch S. 237 - 311 definiert und beschrieben. Die Erfindung befasst sich mit der Verwendbarmachung der genannten feuerfesten Abfallprodukte aus Ausbruch- oder Verschleißmaterial für ungeformte feuerfeste Erzeugnisse wie insbesondere Feuerbetone aber auch z. B. für plastische Massen wie Stampfmassen, Stichlochmassen, feuerfeste Spritzmassen und feuerfeste Mörtel.

Ungeformte feuerfeste Erzeugnisse sind z. B. gemäß ISO 1927 oder DIN 1402-1 Gemische, die mindestens ein feuerfestes Zuschlagstoffgranulat und mindestens ein erhärtendes, z. B. wasserhaltiges Bindemittel aufweisen und die bei ihrer bestimmungsgemäßen Anwendung mit mindestens einer Flüssigkeit, insbesondere Wasser, zu einer verarbeitbaren Frischmasse angemacht und anschließend auf einen Anwendungsort aufgebracht werden, wo die Frischmasse zu einem feuerfesten Festkörper bzw. einer feuerfesten Festmasse abbindet.

Die bisher verwendeten feuerfesten Zuschlagstoffgranulate für ungeformte feuerfeste Erzeugnisse stammen aus sogenannten primären Rohstoffen für die Feuerfestindustrie. Diese Rohstoffe werden in Lagerstätten gewonnen oder synthetisch hergestellt und daraus die auf den feuerfesten Grundstoffen basierenden feuerfesten Zuschlagstoffgranulate erzeugt. Hauptsächlich bestehen die feuerfesten Zuschlagstoffe für feuerfeste Al₂O₃-SiO₂-Erzeugnisse aus Al₂O₃, z. B. aus Bauxit oder Korund, und SiO₂ oder aus Alumosilikaten. Für feuerfeste basische Erzeugnisse bestehen die feuerfesten Zuschlagstoffe meist aus Magnesia, Doloma, Chrommagnesia, Chromerz oder Spinell. Des Weiteren sind feuerfeste Zuschlagstoffe z. B. aus Kieselglas, Siliziumcarbid, Siliziumnitrit, Zirkonsilikat oder Zirkonoxid bekannt.

Sofern kohlenstoffhaltige ungeformte feuerfeste Erzeugnisse hergestellt werden sollen, können z. B. bekannte feuerfeste Zuschlagstoffgranulate, die Kohlenstoff und/oder Graphit enthalten, eingesetzt werden (DE 10 360 508 A1); oder die Gemische aus Zuschlagstoffgranulat und Bindemittel werden mit Kohlenstoffträgern versetzt, wobei das Bindemittel auch ein kohlenstoffhaltiges Bindemittel sein kann.

Als Bindesysteme kommen im Rahmen der Erfindung für die ungeformten feuerfesten Erzeugnisse hauptsächlich hydraulische Bindemittel, insbesondere die hydraulischen Tonerdeschmelzzemente oder Tonerdezemente z. B. nach DIN/EN 14647 zum Einsatz, die insbesondere bei der Herstellung von Feuerfestbetonen verwendet werden. Aber auch chemische, anorganischchemische und organische Bindemittel können für feuerfeste ungeformte Erzeugnisse eingesetzt werden. Die anorganisch-chemischen Bindemittel erhärten nach Zugabe einer geeigneten Anmachflüssigkeit infolge einer Neutralisationsreaktion. Derartige Bindemittel werden z. B. im oben genannten Taschenbuch, Seite 298 Abs. 1, aufgezählt. Bindemittel für Feuerbetone werden z. B. auch in der "Schriftenreihe Spezialbetone Band 4", Massebeton, Feuerbeton, Verlag Bau + Technik, Düsseldorf, 2001, Seite 87 bis 92, angegeben. Die anorganisch-chemischen und organischen Bindemittel sowie die anderen chemischen und hydraulischen Bindemittel für ungeformte feuerfeste Erzeugnisse sind dem Fachmann z. B. auch aus dem Fachbuch H. Salmang, H. Scholze: "Keramik", 7. vollständig neu bearbeitete und erweiterte Auflage, herausgegeben von Rainer Teile, Springer Verlag, S. 761 - 772, bekannt.

Es ist ein hauptsächliches Ziel der Erfindung, feuerfeste Werkstoffgranulate bzw. feuerfeste Zuschlagstoffgranulate, insbesondere für ungeformte feuerfeste Erzeugnisse, insbesondere für die Herstellung von Feuerbetonen, zur Verfügung zu stellen, die mit Bindemitteln und Wasser angemacht werden können.

In der DE 44 27 602 A1 wird ein Verfahren zur Herstellung von feuerfesten keramischen Bauteilen beschrieben, wobei gebrauchte feuerfeste keramische Bauteile mit Kohlenstoffgehalt und hohem Al₂O₃-Gehalt zu einem gekörnten Bruch zerkleinert werden. Dem Bruch wird zur Einstellung des Gesamtkohlenstoffgehalts und des Feinstoffanteils Ruß beigemischt. Dabei wird vorher das Bruchmaterial gereinigt, aufgemahlen und klassifiziert und zu einem Korngrößenspektrum gemischt. Dieses gekörnte Bruchmaterial wird mit einem Harz zu einer bildsamen Masse gemischt und die Masse in einer Form zu einem Bauteil gepresst, das getempert wird.

Aus B. Grabner, et al; "Einsatz von recycliertem MgO-C Material in pech- und harzgebundenen Steinen"; XP9158445 ist bekannt, feuerfestes Ausbruchmaterial zu verwenden zur Herstellung von kohlenstoffgebundenen Magnesiasteinen. Dazu wird das Recyclingmaterial vor der Verarbeitung zusätzlichen Verfahrensschritten, nämlich Sortieren, Homogenisieren und Konditionieren unterzogen. Anschließend werden MgO-C-Steine auf Basis des Recyclingmaterials in pech- als auch kunstharzgebundener Variante gefertigt durch Mischen, Formgebung und Tempern.
Aufgabe der Erfindung ist, feuerfeste Werkstoffgranulate zu schaffen, die preiswerter sind als die jeweils mineralogisch und chemisch entsprechenden, aus primären Rohstoffen stammenden feuerfesten Werkstoffgranulate und die auf einfache Weise herstellbar und ohne zusätzliche Maßnahmen oder Veränderungen von Rezepturen wie die entsprechenden primär eingesetzten Zuschlagstoffgranulate zu ungeformten feuerfesten Erzeugnissen verarbeitbar sind.

Gelöst wird diese Aufgabe durch die Merkmale der Ansprüche 1, 6 sowie 13.

Die Erfindung befasst sich somit mit der Wiederverwendung von Ausbruchmaterial aus hochwertigen Feuerfestzustellungen und feuerfesten Verschleißmaterialien, die nach einem mechanischen Abtrag einer verbrauchten oder auszuwechselnden Zustellung durch mechanische Aufbereitung wie Brechen und/oder Mahlen, gegebenenfalls Homogenisieren und Klassieren neu spezifiziert werden. Dies betrifft z. B. Ausbruchmaterial von Schieberplatten, Glaswannensteinen, Rinnensteinen, Lanzenmassen, Schlackenkonditionen, Schamottesteinen und anderen hochwertigen Zustellungen. Der Fachmann kennt die jeweilige spezifische chemische und mineralogische Zusammensetzung dieser Produkte, weshalb es nicht erforderlich ist, im Rahmen der Offenbarung der vorliegenden Erfindung darauf spezifisch einzugehen. Von diesem Ausbruchmaterial fallen jährlich tausende Tonnen allein in Deutschland an, die derzeit meist aufwändig gelagert bzw. entsorgt werden. Verschleißmaterial im Sinne der Erfindung ist z. B. Schieberplattenbruch, Hochofenrinnenbruch, Bauxitregenerate, Andalusitregenerate, Brennhilfsmittelbruch, Sinterbruch, Produktionsausschüsse, Ofenauskleidungen. Die genaue mineralogische und chemische Zusammensetzung dieser Ausbruch- oder Verschleißmaterialien ist vielfältig und hängt auch von den Bedingungen ab, mit denen die Materialien in der Zustellung beaufschlagt werden. Z. B. haben Temperaturen, Temperaturschwankungen, Schlackeninfiltration, Gasinfiltrationen oder dergleichen die Bestandteilzusammensetzung der Ausbruch- und Verschleißmaterialien geprägt.

Es ist bekannt, dass die Ausbruchmaterialien chemisch-mineralogisch und refraktär hochwertige Substituenten für die primären feuerfesten Werkstoffe sein können, obwohl sie aufgrund ihres bereits erfolgten Einsatzes Veränderungen erfahren haben. Zu den Veränderungen zählen insbesondere Anhaftungen von störenden Stäuben, z. B. Kohlenstoffstaub, mineralogische und/oder chemische Verunreinigungen und Veränderungen und eine stark erhöhte insbesondere offene Porosität und/oder stark erhöhte spezifische Oberfläche. Die Veränderungen stehen einer Wiederverwendung mancher Ausbruchmaterialien für die Herstellung durch Pressen geformter feuerfester Erzeugnisse in der Regel nicht entgegen, die in der Regel ohne Wasserzusatz oder wässrige Bindemittel hergestellt werden, weshalb das Ausbruchmaterial nach seiner mechanischen Aufbereitung mit bis zu etwa 20 Gew.-% in eine Masse zur Herstellung von geformten und gepressten feuerfesten Erzeugnissen als sogenanntes Regenerat ausnahmsweise eingebracht wird. Wegen der Veränderungen ist jedoch eine Wiederverwendung zur Herstellung von ungeformten feuerfesten Erzeugnissen bisher gescheitert, weil die Veränderungen das chemische Milieu einer wässrigen Frischmasse üblicher Rezeptur derart stören, dass z. B. die Aushärtung der Frischmasse und/oder die Festigkeit, insbesondere die Feuerfestigkeit, der Festmasse, z. B. des Festfeuerbetons darunter leidet.

Insbesondere kann der aus einer Feuerbetonzustellung, z. B. aus Schieberplatten stammende Bruch, insbesondere der Bauxitbruch, refraktär, chemisch und mineralogisch in kohlenstoffhaltigen Feuerbetonen als hochwertiger Bauxitersatz eingestuft werden. Bisher ist ein Einsatz z. B. des Schieberplattenbruchs in neuen Feuerbetonmischungen nicht möglich, weil dessen Veränderungen wie hauptsächlich anhaftender Kohlenstoffstaub, die stark erhöhte Porosität im Vergleich zum ursprünglichen feuerfesten Werkstoff und die erhöhte spezifische Oberfläche sowie die mineralogischen und chemischen Verunreinigungen dem entgegenstehen.

Die Erfindung sieht vor, die von außen zugängliche Oberfläche der Körner von mechanisch aufbereiteten feuerfesten Ausbruchmaterial- oder Verschleißmaterialgranulaten, im folgenden auch Regeneratgranulate genannt, derart zu beschichten, dass deren Veränderungen so weitgehend unwirksam werden, dass die Verarbeitbarkeit einer wässrigen, Bindemittel enthaltenden Frischmasse für ein ungeformtes feuerfestes Erzeugnis nicht gestört wird und die vorgegebenen Festigkeiten des erhärteten Erzeugnisses gewährleistet werden können. Wesentlich ist insbesondere auch, dass die Beschichtung das Bindemittelmilieu in einer Frischmasse, insbesondere das basische Milieu hydraulischer Bindemittel, aber auch das Bindemittelmilieu anderer üblicherweise verwendeter mit Wasser zusammenwirkender oder Wasser aufweisender Bindemittel nicht beeinträchtigt, keine zusätzlichen Anmachflüssigkeitsmengen beim Anmachen einer frischen, verarbeitbaren, ungeformten feuerfesten Erzeugnismasse erforderlich werden im Vergleich zur Anmachwassermenge bei Verwendung von primären feuerfesten Werkstoffgranulaten, außerdem die Erhärtungsreaktionen der Bindemittel nicht beeinträchtigt werden und auch keine Einschränkungen bezüglich mechanischer Festigkeit und Feuerfestigkeit des erhärteten Erzeugnisses erfolgen.

Die Erfindung schafft somit neue feuerfeste Regenerate, z. B. neue Schamotteregenerate, Andalusitregenerate, Bauxitregenerate, diverse Tonerderegenerate, Hochtonerderegenerate, z. B. aus Schieberplattenbruch, Korundbruch und/oder Bauxitbruch sowie Zirkonoxidregenerate, Zirkonsilikatregenerate, SiC-Regenerate, Spinellregenerate, MgO-Regenerate und MgO-C-Regenerate.

Eine grundsätzlich mögliche Wiederverwendung von mineralogisch und/oder chemisch verunreinigten, ggf. mit Ausbruchmaterialstaub und/oder Kohlenstoffstaub belasteten und insbesondere eine höhere Porosität im Vergleich zu feuerfesten Werkstoffen aus primären Rohstoffen aufweisenden und bezüglich dieser negativen Eigenschaften zudem von Ausbruch- bzw. Verschleißmaterialcharge zu Ausbruch- bzw. Verschleißmaterialscharge stark schwankenden Materialien war für ungeformte feuerfeste Erzeugnisse bisher an diesen negativen Eigenschaften gescheitert. Die erhöhte und schwankende Porosität, die insbesondere auch die Korndruckfestigkeit mindert, resultiert z. B. auch aus den unterschiedlichen Belastungen in unterschiedlichen Einbauzonen von feuerfesten Auskleidungen bzw. Zustellungen von feuerbelasteten Aggregaten. Die aus primären Rohstoffen stammenden und in der Regel aufbereiteten, auf dem Markt angebotenen feuerfesten primären Werkstoffe weisen dagegen in der Regel eine gleiche Mineralogie und Porosität auf, weshalb insoweit herstellerseitig gleich bleibende Qualitäten der feuerfesten Werkstoffe angeboten und gewährleistet werden.

Bisher ist kein lohnenswerter genereller Weg gefunden worden, veränderte feuerfeste Ausbruchmaterialien und feuerfeste Verschleißmaterialien unabhängig von ihrer physikalischen, mineralogischen und chemischen Eigenschaften einer Wiederverwendung für ungeformte feuerfeste Erzeugnisse zuzuführen, obwohl der Bedarf an feuerfesten Werkstoffen stark gestiegen ist und die primären Rohstoffe dafür knapp und teuer geworden sind oder aber der Bezug dieser Rohstoffe nicht immer problemlos ist wegen zunehmender monopolistischer Konzentration der Rohstoffe auf wenige global tätige Unternehmen.

Die Erfindung befasst sich deshalb mit dem Problem, feuerfeste Ausbruchmaterialien oder anfallende feuerfeste Verschleißmaterialien, die z. B. durch neues feuerfestes Auskleidungsmaterial ersetzt werden müssen, unabhängig von der Chemie und der Mineralogie, von den anhaftenden Verunreinigungen und von der erhöhten Porosität, so aufzubereiten, dass mit diesen Materialien den feuerfesten primären Werkstoffen aus primären Rohstoffen entsprechende Eigenschaften in ungeformten feuerfesten Erzeugnissen gewährleistet werden können. Dabei werden erfindungsgemäß die vorhandenen Eigenschaften der Ausbruch- oder Verschleißmaterialien, insbesondere bezüglich Mineralogie und Chemie, Staubanhaftungen und Porosität, nicht verändert, so dass insoweit auch keine wesentlichen Aufbereitungskosten anfallen.

Die folgende Tabelle zeigt beispielhaft die Unterschiede zwischen den Eigenschaften eines primären Bauxitgranulats und eines aus einem Schieberplattenbruch stammenden potentiellen Bauxitersatzes mit etwa vergleichbarem Tonerdegehalt, wobei letzteres aus einer Charge stammt, die mit primären Hochtonerdegranulaten erstellt und in einer feuerfesten Auskleidung eingebaut worden war und nach deren Abnutzung ausgebrochen wurde. Hier sind vor allem die deutlichen Unterschiede der spezifischen Oberflächen (etwa Faktor 1:10) und der Wasseraufnahmen bei ähnlicher Chemie und Mineralogie hervorzuheben.

| | | Schieberplattenbruch | Primärer Bauxit |
|---|---|---|---|
| Spezifische Oberfläche m²/g | Kornfraktion: | | |
| | 0 - 1 mm | 1,00 | 0,13 |
| | 1 - 3 mm | 0,55 | 0,08 |
| | 3 - 6 mm | 1,78 | 0,06 |
| Wasseraufnahme in Masse-% | | 3,2 | 1,8 |
| Mineralische Bestandteile | Hauptbestandteile | Korund | Alpha Tonerde ca. 80 Masse-% |
| | Nebenbestandteile | Periklas, Mullit, Baddeyelit, Zirkon | Mullite ca. 15 Masse-%, Quarz < 5 Masse-% |
| | Al₂O₃ / % | 83,21 | 89,34 |
| | SiO₂ / % | 6,82 | 6,73 |
| | Fe₂O₃ / % | 0,41 | 0,96 |
| | TiO₂ / % | 0,36 | 2,96 |
| | CaO / % | 0,82 | 0,03 |
| | MgO / % | 5,09 | < 0,01 |
| | K₂O / % | 0,07 | 0,02 |
| Chemische Analyse | Na₂O / % | 0,21 | 0,01 |
| | Mn₃O₄ / % | 0,05 | < 0,01 |
| | Cr₂O₃ / % | 0,06 | 0,05 |
| | P₂O₅ / % | 0,16 | 0,06 |
| | ZrO₂ / % | 2,73 | 0,1 |
| | C / % | 4,11 | n.a. |
| | LOI / % | - 3,38 | - 0,03 |
| | Mahleisen / ppm | 547,6 | 38,5 |
| | Schüttdichte / g/cm³ | 1,62 | 1,88 |

Die beachtlichen Eigenschaftsunterschiede verdeutlichen die Probleme, die auftreten können, wenn das Regeneratgranulat wie das entsprechende ursprüngliche aus primären Werkstoffen stammende Granulat verwendet werden soll. Bei Regeneratgranulaten, die auf anderen feuerfesten Werkstoffen, z. B. Mullit oder SiO₂ oder Spinellen od. dgl. feuerfesten Werkstoffe basieren, liegen ähnliche Veränderungen und Verunreinigungen vor, die deren Wiederverwendbarkeit entgegenstehen. Diese anderen Regeneratgranulate brauchen im Rahmen der Beschreibung der vorliegenden Erfindung bezüglich ihrer Eigenschaften nicht aufgezählt zu werden, weil die erfindungsgemäßen Maßnahmen zur Kompensation der Wirkung der Veränderungen, z. B. der Verunreinigungen und Anhaftungen bzw. Veränderungen bezüglich der Porosität bei nahezu allen bekannten unbeschichteten Granulaten aus Ausbruch- oder Verschleißmaterial also generell greifen. Diese grundsätzlichen erfindungsgemäßen Maßnahmen sind lediglich bezüglich der Eigenart des Regeneratgranulats, z. B. bezüglich des pH-Werts und Auswahl des Beschichtungsmittels anzupassen, wozu einfache Testversuche auf Basis der Lehre der Erfindung ausreichen.

Die erfindungsgemäß verwendeten feuerfesten Ausbruch- oder Verschleißmaterialien stammen z. B. aus Auskleidungen bzw. Zustellungen von Anlagen für thermische Prozesse (z. B. Schmelz-, Brenn- und Wärmebehandlungsanlagen) sowie von Transportgefäßen. Es kann außerdem von feuerfesten Konstruktionselementen bzw. Funktionalprodukten oder aus Wärmerückgewinnungsanlagen oder Wärmedämmanlagen stammen. Hauptsächlich stammen Materialien aus Eisen- und Stahlproduktionsanlagen sowie Anlagen der Nichteisenmetall- und Glasindustrie, der Zement-, Kalk-, Keramik-, Chemie-, Petrochemieindustrie, die brenntechnischen Prozesse der Feuerfestindustrie selbst oder kommunalen und Sondermüllverbrennungsanlagen.

Die Erfindung gelingt in überraschender Weise dadurch, dass Körnungen zwischen 0 und 20, insbesondere zwischen 1 und 12 mm durch Brechen, gegebenenfalls mechanisches Homogenisieren inhomogenen Ausbruch- bzw. Verschleißmaterials z. B. durch Mischen unterschiedlicher Ausbruchchargen bzw. Verschleißmaterialschargen, und Klassieren z. B. Siebung von Ausbruchmaterial oder Verschleißmaterial hergestellt werden und die von außen zugängliche bzw. nach außen weisende äußere Oberfläche der Körner der Körnung und insbesondere auch zumindest teilflächig die Oberfläche der offenen Poren der Körner mit einem ausgewählten Wasser abweisenden Mittel belegt werden. Dabei kann es ausreichen, wenn flächenmäßig der überwiegende Teil (über 50 Flächen-%) der äußeren Oberfläche und/oder der Oberfläche der offenen Poren der Körner belegt sind. Vorzugsweise sind 80 - 100 Flächen-% zumindest der äußeren Oberfläche, vorzugsweise der gesamten, für das Wasser abweisende Mittel zugänglichen Oberfläche, also einschließlich der offenen Poren, belegt. Wasser abweisend im Sinne der Erfindung bedeutet, dass das Beschichtungsmittel ein Eindringen von Wasser behindert oder verhindert.

Zur Herstellung des mechanisch aufbereiteten Regeneratgranulats z. B. aus Schieberplattenbruchmaterial, das mineralogisch hauptsächlich Bauxit und untergeordnet Kohlenstoff und Eisen aufweist, wird das Ausbruchmaterial und/oder das Verschleißmaterial gebrochen, soweit erforderlich von Eisenbestandteilen befreit und anschließend klassiert, wobei in der Regel das Unterkorn verworfen und das Überkorn rückgeführt wird. Das klassierte Regeneratgranulat wird in der Regel noch homogenisiert durch Zusammenmischen von verschiedenen Chargen, die mineralogisch und chemisch vergleichbares Material aufweisen, jedoch aufgrund ihres Gewinnungsorts etwas unterschiedlich belastet und ausgebildet sind.

Derartige Regeneratgranulate, insbesondere in Form von Schieberplatten-Regeneratgranulaten, werden gelegentlich aber nicht grundsätzlich bei der Herstellung von feuerfesten, gepressten Formkörpern z. B. bis zu 100 Masse-%, bezogen auf die trockene Formkörpermasse, einer wasserfreien Mischung zugesetzt.

Ein solches Regeneratgranulat kann auch als Ausgangsmaterial im Rahmen der Erfindung verwendet werden.

Von dem eigens erstellten oder auf dem Markt erstandenen - soweit vorhanden - Regeneratgranulat wählt die Erfindung die oben aufgegebenen Körnungen zwischen 0 und 20, insbesondere zwischen 1 und 12 mm aus für eine nachfolgende spezielle Oberflächenbeschichtung. Danach wird eine weitergehende Auswahl des körnungsmäßig bereits ausgewählten Regeneratgranulates getroffen, indem die Korndruckfestigkeit, bestimmt nach DIN 4226 Teil 3, bzw. EN 13055-1/2002 Verfahren 1, ausgewählt wird. Alternativ kann auch nach der Widerstandsfähigkeit bzw. Verschleißfestigkeit gegen eine mechanische Beanspruchung (Zertrümmerung) von Mischelementen in einem speziellen Mischgefäß gemäß DIN EN 1097-2 ausgewählt werden. Dieses vorgeschaltete Verschleißtestverfahren hat den Zweck, Körnungen zu ermitteln, die insbesondere der nachfolgenden Oberflächenbeschichtung durch Mischen in dem dafür ausgewählten, speziellen Mischer widerstehen. Es gibt verschiedene Mischer, in denen die Beschichtung vorgenommen werden kann und die ein gutes Beschichtungsergebnis liefern. Hat der Fachmann sich für einen Mischer entschieden, dann soll er nach der Lehre der Erfindung damit den Verschleißtest durchführen.

Bezüglich der Korndruckfestigkeit nach DIN 4226 Teil 3, bzw. EN 13055-1/2002 Verfahren 1, werden Körnungen mit Festigkeiten zwischen 8 und 150 N/mm², insbesondere zwischen 15 und 100 N/mm² ausgewählt.

Die Widerstandsfähigkeit gegen mechanische Mischbeanspruchung (Verschleißtest) kann nicht wie die Korndruckfestigkeit spezifisch bemaßt werden, weil die Widerstandsfähigkeit abhängig ist von der Einwirkung des jeweilig verwendeten Mischaggregats bzw. deren Mischerelemente für die Oberflächenbeschichtung. In jedem Fall sollten die Körner des Regeneratgranulats durch das Mischen raumformmäßig möglichst nicht verändert werden, insbesondere keine weitergehende Zerkleinerung bzw. Veränderung im Kornaufbau erfahren. Allenfalls kann eine Zerkleinerung im Mischer bis 20, insbesondere zwischen 5 und 10 Masse-% in Kauf genommen werden. Das heißt, eine Kornfraktion 3 - 6 mm, die vor der Beanspruchung ein Unterkorn von < 5 % aufweist, darf nach der Beanspruchung max. 25 % Unterkorn aufweisen.

Die Widerstandsfähigkeit der Körnung ist somit nach der mechanischen Aufbereitung empirisch zu ermitteln, wozu kein erheblicher Aufwand betrieben werden muss. Es wird lediglich ein Teil des aufbereiteten Regeneratgranulats gesiebt, und dabei werden bestimmte Kornbänder bzw. Kornfraktionen ermittelt. Danach wird der Mischer, der für die Oberflächenbeschichtung des Regeneratgranulats verwendet werden soll, mit einer bestimmten Menge an Regeneratgranulat, von dem der Kornaufbau ermittelt wurde, gefüllt und mit der Mischenergie betrieben, die auch für die Oberflächenbeschichtung angewandt werden soll. Danach wird das Regeneratgranulat bezüglich Veränderung im Kornaufbau analysiert, wobei die gleichen Siebe bezüglich der Kornfraktionen zugrunde gelegt werden. Wenn die Körnung gleich geblieben ist, ist das Regeneratgranulat für die Zwecke der Erfindung optimal und brauchbar. Liegt die Veränderung im Kornaufbau zwischen 0 und 20, insbesondere zwischen 5 und 10 Masse-% im positiven oder negativen Mengenbereich in jeder Kornfraktion, ist das Regeneratgranulat ebenfalls noch brauchbar, d. h., dass das Regeneratgranulat in jedem Fall auch noch brauchbar ist, wenn es lediglich in einer Kornfraktion oder in mehreren Kornfraktionen im oben angegebenen Bereich verändert ist.

Ein derartiges, im ausgewählten Mischer verschleißfestes ausgewähltes Regeneratgranulat weist Kornfestigkeiten auf, die gewährleisten, dass die Körnung das Mischen mit einem erfindungsgemäßen Beschichtungsmittel im gleichen oder in einem gleichartigen Mischer für die Oberflächenbeschichtung unbeschadet übersteht. Daraus resultiert auch, dass das beschichtete Regeneratgranulat z. B. beim Einmischen in eine Feuerbetontrockenmischung in einem dafür verwendeten ähnlichen Mischer formstabil bleibt, d. h. nicht zerkleinert wird oder zerbröselt und die Oberflächenbeschichtung erfindungsgemäß wirksam bleibt in einem wässrigen Frischmassenmilieu eines ungeformten feuerfesten Erzeugnisses. Aus diesem Grund werden vorzugsweise Mischer für den Verschleißtest und insbesondere auch für die Beschichtung verwendet, die mit einer identischen oder vergleichbaren Mischenergie auf das Mischgut einwirken.

Nach der Erfindung werden außer der Verwendung von Körnungen vorbestimmter Kornfestigkeit die Körner der Körnung oberflächlich beschichtet derart, dass ein Eindringen von Wasser von außen z. B. beim Anmachen einer wässrigen Frischmasse eines ungeformten feuerfesten Erzeugnisses, z. B. einer Feuerbetonfrischmasse, verhindert ist oder Wasser nur bis zu maximal 5, insbesondere zwischen 0,2 und 2 Masse-%, bezogen auf die Körnung, in das Korn eindringen kann.

Es gibt viele Möglichkeiten und viele Stoffe, mit denen die Körner der Körnung so beschichtet werden können, dass nach der Beschichtung kein Wasser oder nur sehr wenig Wasser in die Körner eindringen kann. Damit wird aber die Körnung noch nicht ohne weiteres für die bestimmungsgemäße Verwendung für ungeformte feuerfeste Erzeugnisse brauchbar. Im Rahmen der Erfindung wurde herausgefunden, dass der pH-Wert beachtet werden muss, der sich in einem wässrigen, die Körnung enthaltenden Milieu einstellt. Wenn der pH-Wert zwischen 6 und 9, insbesondere zwischen 6 und 8,5 liegt im Fall von tonerdereichen Erzeugnissen und zwischen pH 8 und 12 im Fall von magnesitischen Erzeugnissen, ist die beschichtete Körnung für den bestimmungsgemäßen Gebrauch in Mischungen zur Herstellung wässriger, ungeformter feuerfester Erzeugnisse verwendbar. Demgemäß scheiden Beschichtungsmaterialien aus, die einen pH-Wert im oben angegebenen pH-Wert-Bereich im wässrigen Milieu nicht gewährleisten können bzw. durch ihn verändert z. B. sogar zerstört werden.

Insofern muss das Beschichtungsmaterial bzw. der Beschichtungsstoff synergistisch wirken und nicht nur das Eindringen von Wasser total oder weitestgehend verhindern, sondern auch zumindest dazu beitragen oder gewährleisten, dass der pH-Wert der Körnung in einem wässrigen Milieu im oben angegebenen pH-Wert-Bereich liegt und beständig ist.

Nach der Erfindung wird die äußere Oberfläche der Körner der Körnung mit einem wässrigen hydrophobierenden Mittel belegt. Diese Beschichtung weist eine nanoskalige Beschichtungsdicke auf. Die Schichtdicke lässt sich nicht genauer beziffern; sie liegt aber in jedem Fall im Nanometerbereich.

Zur Herstellung eines solchen beschichteten Regeneratgranulats ist es zunächst erforderlich, den pH-Wert der unbeschichteten Regeneratkörnung im wässrigen Milieu zu ermitteln. Dieser pH-Wert resultiert aus dem pH-Wert des feuerfesten Materials, z. B. des Bauxits oder Mullits, des Regeneratgranulats sowie den Anhaftungen, wie z. B. von Bestandteilen von erhärteten Bindemitteln und/oder von Schlackenbestandteilen und/oder von Armierungsfasern und/oder Kohlenstoffteilchen. Danach kann ein Hydrophobierungsmittel ausgewählt werden, dessen pH-Wert in Kombination mit dem pH-Wert des unbeschichteten Regeneratgranulats einen pH-Wert im oben angegebenen Bereich zwischen 6 und 9 (tonerdereich) sowie 9 und 12 (magnesitisch) ergibt. Dieser Verfahrensschritt ist mit dieser erfindungsgemäßen Lehre für den Fachmann ohne erfinderische Tätigkeit einfach nachvollziehbar.

Im Rahmen der Erfindung wurde festgestellt, dass sich die beiden pH-Werte, nämlich der pH-Wert des unbeschichteten Regeneratgranulats und der pH-Wert des Beschichtungsmittels, beeinflussen können und durch Auswahl eines den pH-Wert regulierenden Hydrophobierungsmittels der pH-Wert des beschichteten Regeneratgranulats optimal einstellbar ist. Ein außerhalb des oben angegebenen pH-Wert-Bereichs liegender pH-Wert kann die Rheologie einer Frischmasse und/oder die Entwicklung der mineralischen, die Festigkeit der Festmasse des ungeformten feuerfesten Erzeugnisses gewährleistenden Abbindephasen des Bindemittels in einer abbindenden wässrigen Frischmasse derart beeinflussen, dass die erforderliche bildsame Konsistenz (Verarbeitbarkeit) der Frischmasse und/oder die erforderliche Festigkeitsentwicklung nicht eintreten oder zumindest stark beeinträchtigt werden.

Unter Berücksichtigung obiger Auswahlkriterien hat die Erfindung herausgefunden, dass die folgenden an sich bekannten wässrigen Hydrophobierungsmittel für die Hydrophobierung der feuerfesten Regeneratgranulate geeignet sind:
Si-Polymere z. B. Silane, Siloxane, Siliconharze, Siliziumderivate, Wassergläser, Kieselsole und deren Mischungen und Stearate z. B. in Form von Metallseifen.

Diese Mittel wirken, wenn sie aufgetragen sind, Wasser abweisend, sind Wasserdampf durchlässig und ausreichend langzeitig wirkend, so dass das beschichtete Regeneratgranulat ausreichend lange lagerbeständig ist. Die wässrigen hydrophobierenden Mittel werden vorzugsweise mit einem Wassergehalt zwischen 0 und 99, insbesondere 30 und 70 Masse-%, bezogen auf das Hydrophobierungsmittel, verwendet.

Für die Hydrophobierung werden die Körnungen mit dem Hydrophobierungsmittel in einem z. B. oben charakterisierten Mischer gemischt, z. B. besprüht, wobei die Zusatzmenge an Hydrophobierungsmittel so gewählt wird, dass das beschichtete Produkt oberflächlich homogen verteilt hydrophobiert ist und dabei zwischen 0,1 und 1,5, insbesondere zwischen 0,5 und 1,0 Masse-% Hydrophobierungsmittel aufweist. Weniger Hydrophobierungsmittel würde eine unvollkommene Hydrophobierung ergeben mit dem Ergebnis, dass die Körner noch zu viel Wasser aufnehmen und die pH-Werteinstellung nicht stimmig ist. Im Fall einer Überdosierung des Hydrophobiermittels kommt es dazu, dass freies Hydrophobiermittel später in der Trockenmischung vorliegt und es sich aufgrund seiner Affinität zu mineralischen Kontaktpartnern weitere Flächen sucht und somit die gesamte Trockenmischung hydrophoben Charakter erhalten kann. Zusätzlich ist die Trockenmasse des behandelten Regeneratkornes deutlich aufwendiger zu gestalten. Bei der Hydrophobierung wird die äußere Oberfläche und insbesondere auch die von außen zugängliche Porenoberfläche mit Hydrophobierungsmittel belegt.

Mit der Hydrophobierung ist aber das hydrophobierte Regeneratgranulatprodukt noch nicht geeignet für die Herstellung von Werktrockenmischungen für ungeformte feuerfeste Erzeugnisse. Ungeformte feuerfeste Erzeugnisse werden in der Regel als insbesondere abgepackte oder lose gelagerte Werktrockenmischungen bekannter Zusammensetzung auf den Markt gebracht. Eine Werktrockenmischung ist eine werksseitig hergestellte Mischung, die nur noch mit Wasser angemacht zu werden braucht und im Übrigen bereits alle Mischungsbestandteile einer Trockenmischung für ungeformte feuerfeste Erzeugnisse aufweist. Der Anteil an Hydrophobierungsmittel im Regeneratgranulat nach der Beschichtung ist derart hoch, dass dessen Wassergehalt in der insbesondere abgepackten oder in Behältern lose gelagerten Werktrockenmischung eine Abbindung, z. B. eine Hydratphasenbildung, des Bindemittels der Trockenmischung bewirken kann. Es ist deshalb auch ein wesentliches Merkmal der Erfindung, dass das mit dem wässrigen Hydrophobierungsmittel gemischte Regeneratgranulat nach dem Mischen ausgetrocknet wird, z. B. bei Temperaturen bis 110, insbesondere zwischen 20 und 70°C auf Feuchtigkeitsgehalte zwischen 0 und zwischen 0,5, insbesondere zwischen 0 und zwischen 0,3 Masse-%, bezogen auf das Regeneratgranulat.

Mit solchen erfindungsgemäß oberflächlich beschichteten, getrockneten Regeneratgranulaten können Werktrockenmischungen zur Herstellung ungeformter feuerfester Erzeugnisse erstellt werden, die die bereits verwendete marktgängige Rezeptur aufweisen, die jedoch anstelle der primären feuerfesten Werkstoffgranulate als Zuschlagstoff erfindungsgemäß oberflächlich beschichtete Regeneratgranulate bis zu 100 Masse-%, bezogen auf den Zuschlagstoffanteil, insbesondere zwischen 1 und 80, ganz besonders zwischen 10 und 70 Masse-%, bezogen auf den Zuschlagstoffanteil enthalten.

Wie gängige Rezepturen von Werktrockenmischungen für Feuerbetone oder andere ungeformte feuerfeste Erzeugnisse aufgebaut sind, ist dem Fachmann bekannt und in der Fachliteratur, z. B. in der oben genannten "Schriftenreihe Spezialbetone Band 4" ausführlich beschrieben. Neu ist in solchen, gängigen Erzeugnissen lediglich der Anteil eines erfindungsgemäßen oberflächlich beschichteten Regeneratgranulats oder der Ersatz durch ein erfindungsgemäßes Granulat als Zuschlagstoff gleichen Typs, d. h. vergleichbarer insbesondere gleicher Mineralogie und vergleichbarem insbesondere gleichem Chemismus im Vergleich zum primären feuerfesten Werkstoff, der bisher für die gleiche Rezeptur verwendet wurde.

Die Beschichtung eines Regeneratgranulats mit dem Hydrophobierungsmittel in einem Mischer erfolgt insbesondere durch Einsprühen des Hydrophobierungsmittels während des Mischvorgangs in den Mischer oder durch Zugeben vor oder während des Mischvorgangs.

Die Beschichtung von Regeneratgranulaten insbesondere von Schieberplattenbruchgranulaten mit Bitumen oder bituminösen Stoffen ist bekannt. Diese Beschichtung erfolgt zur Kombination des Regeneratgranulats mit einem Kohlenstoffträger. Diese beschichteten Regeneratgranulate werden bei der Herstellung kohlenstoffhaltiger gepresster feuerfester Erzeugnisse aus wasserfreien Rezepturen verwendet. Bei der Herstellung von in Formen geformten und gepressten Erzeugnissen stören eine geringe Klebrigkeit des Bitumens bzw. der bituminösen Stoffe oder ein unpassender pH-Wert nicht. Die bekannten Bitumen beschichteten Regeneratgranulate sind aber für die Herstellung von ungeformten feuerfesten Erzeugnissen unbrauchbar, weil sie nicht die oben beschriebenen, erfindungswesentlichen Eigenschaften gewährleisten können.

Mit der Erfindung ist somit ein Weg aufgezeigt worden, generell Regeneratgranulate aus feuerfestem Ausbruch- oder Verschleißmaterial für ungeformte feuerfeste Erzeugnisse brauchbar zu machen, wobei das Granulat nicht bezüglich der im primären Einsatz erfahrenen chemischen und mineralogischen Veränderungen und Anhaftungen aufwändig aufbereitet wird. Das Regeneratgranulat wird nach einer mechanischen Aufbereitung belassen wie es ist und lediglich mit ausgewählten Beschichtungsmitteln bzw. Beschichtungsstoffen derart beschichtet, dass die Veränderungen, die das ursprüngliche feuerfeste Material im primären Einsatz erfahren hat, beim erneuten Einsatz des Regeneratgranulats in einem ungeformten feuerfesten Erzeugnis unschädlich bleiben, so dass die Feuerfestigkeit der Bestandteile des beschichteten Regeneratgranulats genutzt werden kann. Dadurch wird das neue Regeneratgranulat ein vollwertiger und preiswerter sekundärer feuerfester Ersatzwerkstoff für die entsprechenden primär verwendeten feuerfesten Werkstoffe.

Das neue beschichtete Regeneratgranulat ist anhand der Bestandteile seiner Körner und der Beschichtung erkennbar. Wesentliche Bestandteile sind hauptsächlich das feuerfeste Werkstoffmaterial, z. B. Bauxit und/oder Mullit und/oder Korund (BFA und WFA) und/oder Andalusit und/oder Magnesit und/oder Schamotte und untergeordnet feuerfestes erhärtetes Bindemittelmaterial, z. B. in Form von Kohlenstoff und/oder Siliziumverbindungen (Wassergläser und Kieselsole) und/oder Calziumaluminatzemente und/oder Minerale aus einer keramischen Bindung und/oder Phosphatverbindungen und/oder Calziumsilikatzemente.

Das zunächst mechanisch durch Zusammenmischen von bezüglich Mineralogie und Chemismus sowie Anhaftungen inhomogenem Ausbruch- bzw. Verschleißmaterial, das aus einem einzigen Ausbruchort, z. B. einer bestimmten Zementofenzone, oder aus verschiedenen Ausbruchorten gleichen Auskleidungsmaterials, z. B. aus mehreren Zementöfen, stammen kann, homogenisierte Regeneratgranulat weist Körner auf, deren feuerfester Werkstoff durch die Einwirkung von Wärmeenergie und Kontaktierung z. B. mit Schmelzen oder Schlacken, am primären Einbauort verändert worden ist sowie auch Körner auf, die aus Auskleidungszonen stammen, die von der Wärmeenergie und Schmelzen oder Schlacken am primären Einbauort noch nicht oder wenig verändernd beeinflusst worden sind; mithin können Körner vorliegen, die als feuerfester Werkstoff noch den primären Werkstoff aufweisen oder den primären Werkstoff mineralogisch aufweisen und lediglich eine höhere Porosität besitzen. Insofern ist ein erfindungsgemäßes, beschichtetes Regeneratgranulat ohne weiteres als solches z. B. durch mineralogische und/oder chemische Analysen der Granulate erkennbar.

Die Erfindung wird insbesondere charakterisiert durch ein feuerfestes Regeneratgranulat aus mechanisch aufbereitetem, feuerfestem Ausbruchmaterial und/oder Verschleißmaterial, dessen Körner oberflächlich ein Beschichtungsmittel aufweisen, wobei das Beschichtungsmittel Wasser abweisend ist und besteht aus
a) einem Hydrophobierungsmittel
   wobei das Granulat aufweist
b) einen pH-Wert zwischen 6 und 9, vorzugsweise zwischen 6 und 8,5 (tonerdereich) und 9 bis 12 (magnesitisch) in einem wässrigen Milieu
c) eine Korndruckfestigkeit nach DIN 4226 Teil 3, bzw. EN 13055-1/2002 zwischen 8 und 150, insbesondere zwischen 15 und 100 N/mm².

Vorteilhaft ist ferner, wenn das Hydrophobierungsmittel ausgewählt ist aus der Gruppe der Siliziumpolymere
oder
wenn die Beschichtungsdicke auf den Körnern nanoskalig ist und das Granulat eine Beschichtungsmittelmenge zwischen 0,1 und 1,5, insbesondere zwischen 0,5 und 1,0 Masse-% aufweist.

Das erfindungsgemäße Verfahren zur Herstellung eines erfindungsgemäßen Regeneratgranulats sieht vor, ein mechanisch aufbereitetes, feuerfestes Ausbruch- oder Verschleißmaterial mit einem Beschichtungsmittel in einem Mischer zu beschichten, wobei die folgenden Verfahrensschritte ausgeführt werden:
a) es wird ein aufbereitetes Regeneratgranulat ausgewählt, das Korndruckfestigkeiten zwischen 8 und 150, insbesondere zwischen 15 und 100 N/mm² aufweist,
b) die Körner des ausgewählten Granulats werden beschichtet mit einem Hydrophobierungsmittel
c) ein Beschichtungsmittel wird ausgewählt, das dem beschichteten Granulat in einem wässrigen Milieu einen pH-Wert zwischen 6 und 9, insbesondere zwischen 6 und 8,5 bei tonerdereichen Materialien und zwischen 9 und 12 bei magnesitischen Materialien gewährleistet.

Vorteilhaft ist zudem, wenn eine Teilmenge des mechanisch aufbereiteten Granulats vor dem Beschichten einem Mischertyp, der für die Beschichtung und die Weiterverarbeitung des beschichteten Granulats zu einer Werktrockenmischung für ungeformte feuerfeste Erzeugnisse vorgesehen ist, auf Verschleißfestigkeit des Granulats getestet wird, indem die Teilmenge in dem Mischer eine vorbestimmte Zeit gemischt wird und anschließend der Verschleiß ermittelt wird
oder
wenn die Hydrophobierungsmittel ausgewählt werden aus der Gruppe der Siliciumpolymere
wobei das Hydrophobierungsmittel vorzugsweise einen Wassergehalt zwischen 0 und 80, insbesondere zwischen 30 und 70 Masse-% aufweist
oder
wenn das beschichtete Granulat getrocknet wird bis das Granulat lediglich noch Wassergehalte zwischen 0,0 und 0,5; insbesondere zwischen 0,0 und 0,3 Masse-% aufweist
oder
wenn das Hydrophobierungsmittel in den Mischer während des Mischens eingesprüht wird.

## Patentansprüche

1. Feuerfestes Regeneratgranulat aus mechanisch aufbereitetem feuerfestem Ausbruchmaterial und/oder Verschleißmaterial, dessen Körner oberflächlich ein Beschichtungsmittel aufweisen, wobei das Beschichtungsmittel Wasser abweisend ist und besteht aus
a) einem Hydrophobierungsmittel
wobei das Granulat aufweist
b) einen pH-Wert zwischen 6 und 9, bei tonerdereichen Materialien und zwischen 9 und 12 bei magnesitischen Materialien in einem wässrigen Milieu
c) eine Korndruckfestigkeit nach DIN 4226 Teil 3, bzw. EN 13055-1/2002 zwischen 8 und 150 N/mm².

2. Regeneratgranulat nach Anspruch 1,
**dadurch gekennzeichnet, dass**
der pH-Wert 6 und 8,5 bei tonerdereichen Materialien liegt.

3. Regeneratgranulat nach Anspruch 1 und/oder 2,
**dadurch gekennzeichnet, dass**
die Korndruckfestigkeit zwischen 15 und 100 N/mm² liegt.

4. Regeneratgranulat nach einem oder mehreren der Ansprüche 1 bis 3,
**dadurch gekennzeichnet, dass**
das Hydrophobierungsmittel ausgewählt ist aus der Gruppe der Siliziumpolymere.

5. Regeneratgranulat nach Anspruch 4,
**dadurch gekennzeichnet, dass**
die Beschichtungsdicke auf den Körnern nanoskalig ist und das Granulat eine Beschichtungsmittelmenge zwischen 0,1 und 5,0, insbesondere zwischen 0,5 und 1,0 Masse-% aufweist.

6. Verfahren zur Herstellung eines Regeneratgranulats nach einem oder mehreren der vorhergehenden Ansprüche, wobei ein mechanisch aufbereitetes feuerfestes Ausbruch- oder Verschleißmaterial mit einem Beschichtungsmittel in einem Mischer beschichtet wird,
**gekennzeichnet durch**
die folgenden Verfahrensschritte:
a) es wird ein aufbereitetes Granulat aus Ausbruch- oder Verschleißmaterial ausgewählt, das Korndruckfestigkeiten nach DIN 4226 Teil 3, bzw. EN 13055-1/2002 zwischen 8 und 150 N/mm² aufweist,
b) die Körner des ausgewählten Granulats werden beschichtet mit einem Hydrophobierungsmittel
c) es wird ein Beschichtungsmittel ausgewählt, das dem beschichteten Granulat in einem wässrigen Milieu einen pH-Wert zwischen 6 und 9 bei tonerdereichen und zwischen 9 und 12 bei magnesitischen Erzeugnissen gewährleistet, indem der pH-Wert des unbeschichteten Granulats im wässrigen Milieu ermittelt und danach ein Hydrophobierungsmittel ausgewählt wird, das in Kombination mit dem pH-Wert des Granulats einen pH-Wert im angegebenen Bereich ergibt.

7. Verfahren nach Anspruch 6,
**dadurch gekennzeichnet, dass**
ein Granulat aus Ausbruch- oder Verschleißmaterial ausgewählt wird, das Korndruckfestigkeiten zwischen 15 und 100 N/mm² aufweist.

8. Verfahren nach Anspruch 6 und/oder 7,
**dadurch gekennzeichnet, dass**
ein Beschichtungsmittel ausgewählt wird, das dem beschichteten Granulat in einem wässrigen Milieu einen pH-Wert zwischen 6 und 8,5 bei tonerdereichen Erzeugnissen gewährleistet.

9. Verfahren nach einem oder mehreren der Ansprüche 6 bis 8,
**dadurch gekennzeichnet, dass**
eine Teilmenge des mechanisch aufbereiteten Granulats vor dem Beschichten einem Mischertyp, der für die Beschichtung und die Weiterverarbeitung des beschichteten Granulats zu einer Werktrockenmischung für ungeformte feuerfeste Erzeugnisse vorgesehen ist, auf Verschleißfestigkeit des Granulats getestet wird, indem die Teilmenge in dem Mischer eine vorbestimmte Zeit gemischt wird und anschließend der Verschleiß ermittelt wird.

10. Verfahren nach einem oder mehreren der Ansprüche 6 bis 9,
**dadurch gekennzeichnet, dass**
die Hydrophobierungsmittel ausgewählt werden aus der Gruppe der Siliziumpolymere, z. B. in Form von Silan, Siloxan, Siliconharze, wobei das Hydrophobierungsmittel vorzugsweise einen Wassergehalt zwischen 0 und 80, insbesondere zwischen 30 und 70 Masse-% aufweist.

11. Verfahren nach Anspruch 10,
**dadurch gekennzeichnet, dass**
das beschichtete Granulat getrocknet wird bis das Granulat lediglich noch Wassergehalte zwischen 0 und 0,5, insbesondere zwischen 0 und 0,3 Masse-% aufweist.

12. Verfahren nach einem oder mehreren der Ansprüche 6 bis 11,
**dadurch gekennzeichnet, dass**
das Hydrophobierungsmittel in den Mischer während des Mischens eingesprüht wird.

13. Verwendung eines feuerfesten Regeneratgranulats gemäß einem oder mehreren der Ansprüche 1 bis 5, hergestellt nach einem oder mehreren der Ansprüche 6 bis 12, in zumindest ein Bindemittel und mindestens einen Zuschlagstoff und gegebenenfalls mindestens ein Zusatzmittel und/oder gegebenenfalls mindestens einen Zusatzstoff aufweisenden Werktrockenmischungen zur Herstellung von ungeformten feuerfesten Erzeugnissen, wobei die Werktrockenmischungen anstelle primärer feuerfester Werkstoffgranulate bis zu 100 Masse-% bezogen auf den Zuschlagstoffanteil erfindungsgemäß oberflächlich beschichteter Regeneratgranulat insbesondere 1 bis 80, ganz besonders zwischen 10 und 70 Masse-% bezogen auf den Zuschlagstoffanteil enthalten.

14. Verwendung nach Anspruch 13 für Feuerbeton-Werktrockenmischungen.

## Claims

1. A refractory regenerated granulate consisting of mechanically processed refractory breakout material and/or wearing material, the grains of which have on their surface a coating agent, wherein
the coating agent is water-repellent and consists of
a) a hydrophobing agent
the granulate having
b) a pH value of between 6 and 9 for alumina-rich materials and between 9 and 12 for magnesitic materials in an aqueous medium
c) a grain compressive strength according to DIN 4226 Part 3 or EN 13055-1/2002 of between 8 and 150 N/mm².

2. A regenerated granulate according to Claim 1,
**characterised in that**
the pH value lies 6 and 8.5 for alumina-rich materials.

3. A regenerated granulate according to Claim 1 and/or 2,
**characterised in that**
the grain compressive strength lies between 15 and 100 N/mm².

4. A regenerated granulate according to one or more of Claims 1 to 3,
**characterised in that**
the hydrophobing agent is selected from the group of silicon polymers.

5. A regenerated granulate according to Claim 4,
**characterised in that**
the coating thickness on the grains is nanoscale and the granulate has an amount of coating agent of between 0.1 and 5.0, in particular between 0.5 and 1.0, % by weight.

6. A method for the production of a regenerated granulate according to one or more of the preceding Claims, wherein a mechanically processed refractory breakout material or wearing material is coated with a coating agent in a mixer,
**characterised by**
the following method steps:
a) a processed granulate consisting of breakout material or wearing material which has grain compressive strengths of between 8 and 150 N/mm² according to DIN 4226 Part 3 or EN 13055-1/2002 is selected,
b) the grains of the selected granulate are coated,
with a hydrophobing agent
c) a coating agent is selected which ensures that the coated granulate in an aqueous medium has a pH value of between 6 and 9 for alumina-rich products and of between 9 and 12 for magnesitic products, in that the pH value of the uncoated granulate in aqueous medium is determined, and thereafter a hydrophobing agent which in combination with the pH value of the granulate yields a pH value within the stated range is selected.

7. A method according to Claim 6,
**characterised in that**
a granulate consisting of breakout material or wearing material which has grain compressive strengths of between 15 and 100 N/mm² is selected.

8. A method according to Claim 6 and/or 7,
**characterised in that**
a coating agent is selected which ensures that the coated granulate in an aqueous medium has a pH value of between 6 and 8.5 for alumina-rich products.

9. A method according to one or more of Claims 6 to 8,
**characterised in that**
a partial quantity of the mechanically processed granulate before the coating to a mixer type which is provided for the coating and the further processing of the coated granulate to form a ready-made dry blend for unshaped refractory products, is tested for wear resistance of the granulate by mixing the partial quantity in the mixer for a predetermined time and then determining the wear.

10. A method according to one or more of Claims 6 to 9,
**characterised in that**
the hydrophobing agents are selected from the group of silicon polymers, e.g. in the form of silane, siloxane, silicone resins, the hydrophobing agent preferably having a water content of between 0 and 80, in particular between 30 and 70, % by weight.

11. A method according to Claim 10,
**characterised in that**
the coated granulate is dried until the granulate has merely water contents of between 0 and 0.5, in particular between 0 and 0.3, % by weight.

12. A method according to one or more of Claims 6 to 11,
**characterised in that**
the hydrophobing agent is sprayed into the mixer during the mixing.

13. Use of a refractory regenerated granulate according to one or more of Claims 1 to 5, produced according to one or more of Claims 6 to 12, in ready-made dry blends having at least one binding agent and at least one aggregate and optionally at least one additive agent and/or optionally at least one additive for the production of unshaped refractory products, the ready-made dry blends containing instead of primary refractory material granulates up to 100% by weight, relative to the proportion of aggregate, of regenerated granulates surface-coated according to the invention, in particular 1 to 80, very particularly between 10 and 70, % by weight relative to the proportion of aggregate.

14. Use according to Claim 13 for refractory concrete ready-made dry blends.

## Revendications

1. Granulat réfractaire de régénération, issu de matériaux d'excavation et/ou de matériaux d'abrasion, réfractaires et préparés mécaniquement, dont les grains portent en surface un revêtement,
lequel revêtement est hydrophobe et constitué
a) d'un agent d'hydrophobisation,
et lequel granulat présente
b) un pH, en milieu aqueux, de 6 à 9 pour des matériaux riches en alumine, et de 9 à 12 pour des matériaux de type magnésite,
c) et une résistance des grains à la pression qui, mesurée selon la norme DIN 4226, partie 3, ou selon la norme EN 13055-1/2002, vaut de 8 à 150 N/mm².

2. Granulat de régénération, conforme à la revendication 1, **caractérisé en ce que**, dans le cas de matériaux riches en alumine, le pH vaut 6 à 8,5.

3. Granulat de régénération, conforme aux revendications 1 et/ou 2, **caractérisé en ce que** la résistance des grains à la pression vaut de 15 à 100 N/mm².

4. Granulat de régénération, conforme à l'une ou plusieurs des revendications 1 à 3, **caractérisé en ce que** l'agent d'hydrophobisation est choisi dans l'ensemble des polymères à base de silicium.

5. Granulat de régénération, conforme à la revendication 4, **caractérisé en ce que** la couche de revêtement présente sur les grains est d'épaisseur nanométrique, et la proportion moyenne du revêtement dans le granulat vaut de 0,1 à 5,0 % en masse, et en particulier, de 0,5 à 1,0 % en masse.

6. Procédé de préparation d'un granulat de régénération conforme à l'une ou plusieurs des revendications précédentes, dans lequel un matériau d'excavation ou d'abrasion, réfractaire et préparé mécaniquement, est revêtu, dans un mélangeur, avec un moyen de revêtement, **caractérisé par** les étapes suivantes :
a) on choisit un granulat préparé, issu de matériaux d'excavation ou de matériaux d'abrasion, qui présente une résistance des grains à la pression qui vaut de 8 à 150 N/mm² selon la norme DIN 4226, partie 3, ou selon la norme EN 13055-1/2002,
b) on revêt les grains du granulat choisi
avec un agent d'hydrophobisation
c) et l'on choisit un moyen de revêtement qui confère au granulat revêtu un pH, en milieu aqueux, de 6 à 9 pour des produits riches en alumine, et de 9 à 12 pour des produits de type magnésite, étant entendu que l'on détermine le pH en milieu aqueux du granulat non revêtu et que l'on choisit ensuite un agent d'hydrophobisation, qui donne, en combinaison avec le pH du granulat, un pH situé dans l'intervalle indiqué.

7. Procédé conforme à la revendication 6, **caractérisé en ce que** l'on choisit un granulat issu de matériaux d'excavation ou de matériaux d'abrasion, qui présente une résistance des grains à la pression qui vaut de 15 à 100 N/mm².

8. Procédé conforme aux revendications 6 et/ou 7, **caractérisé en ce que** l'on choisit un moyen de revêtement qui confère au granulat revêtu un pH, en milieu aqueux, de 6 à 8,5 pour des produits riches en alumine.

9. Procédé conforme à l'une ou plusieurs des revendications 6 à 8, **caractérisé en ce que**, avant l'opération de revêtement, on teste, sur une fraction du granulat préparé mécaniquement, la résistance du granulat à l'abrasion, dans un mélangeur du type prévu pour le revêtement du granulat et le traitement ultérieur du granulat revêtu visant à transformer celui-ci en un mélange sec pour produits réfractaires non moulés, étant entendu que l'on brasse dans le mélangeur la fraction de granulat pendant un laps de temps prédéfini et que l'on en détermine ensuite le degré d'abrasion.

10. Procédé conforme à l'une ou plusieurs des revendications 6 à 9, **caractérisé en ce que** l'agent d'hydrophobisation est choisi dans l'ensemble des polymères à base de silicium, par exemple sous forme de silane, de siloxane ou de résine de silicone, étant entendu que de préférence, cet agent d'hydrophobisation présente une teneur en eau qui vaut de 0 à 80 % en masse, et en particulier, de 30 à 70 % en masse.

11. Procédé conforme à la revendication 10, **caractérisé en ce que** l'on fait sécher le granulat revêtu jusqu'à ce que la teneur en eau du granulat ne vaille plus que de 0 à 0,5 % en masse, et en particulier, de 0 à 0,3 % en masse.

12. Procédé conforme à l'une ou plusieurs des revendications 6 à 11, **caractérisé en ce que** l'on introduit l'agent d'hydrophobisation dans le mélangeur pendant le brassage, par pulvérisation.

13. Utilisation d'un granulat réfractaire de régénération, conforme à l'une ou plusieurs des revendications 1 à 5, préparé conformément à l'une ou plusieurs des revendications 6 à 12, dans des mélanges-maîtres secs comprenant au moins un liant et au moins un agrégat, et, le cas échéant, au moins un additif, et/ou, le cas échéant, au moins un adjuvant, destinés à la fabrication de produits réfractaires non moulés, étant entendu que les mélanges-maîtres secs contiennent, à la place de granulats de matériaux réfractaires primaires, des granulats de régénération revêtus en surface selon l'invention, en une proportion qui, rapportée à la fraction agrégat, vaut jusqu'à 100 % en masse, en particulier, de 1 à 80 % en masse, et surtout de 10 à 70 % en masse.

14. Utilisation conforme à la revendication 13, pour des mélanges-maîtres secs pour béton réfractaire.
